# EUROPÄISCHE PATENTSCHRIFT

(11) **EP 4 047 282 B1**
(45) Veröffentlichungstag und Bekanntmachung des Hinweises auf die Patenterteilung: **06.11.2024**
(21) Anmeldenummer: 21158144.2
(22) Anmeldetag: 19.02.2021
(51) Int. Cl.: F24H 8/00

(54) **BRENNWERTKESSEL-KONDENSAT-ABFÜHRUNGSVORRICHTUNG**
FUEL CONTAINER CONDENSATE DISCHARGE DEVICE
DISPOSITIF DE DÉCHARGE DE CONDENSAT DE CHAUDIÈRE À GAZ À CONDENSATION

(43) Veröffentlichungstag der Anmeldung: 24.08.2022
(73) Patentinhaber: Hoval Aktiengesellschaft, 9490 Vaduz (LI)
(72) Erfinder: TELIAN, Markus, 6912 Hörbranz (AT)
(74) Vertreter: Zenz Patentanwälte Partnerschaft mbB

(56) Entgegenhaltungen:
- EP-A1- 0 404 736
- CH-A- 373 714
- DE-A1- 102006 041 595
- DE-B- 1 102 659

## Beschreibung

Die Erfindung richtet sich auf eine Brennwertkessel-Kondensat-Abführungsvorrichtung zur Abführung von an einem Brennwertkessel anfallendem Kondensat.

Moderne Heizgeräte sind in der Regel als sogenannte Brennwertgeräte mit Brennwertkesseln ausgelegt. Mit Hilfe solcher Brennwertkessel wird das Abgas weitestgehend abgekühlt und dadurch auch die Kondensationswärme des im Rauchgas enthaltenen Wasserdampfes zur Wärmebereitstellung genutzt. Dabei wird das Abgas unterhalb seiner Kondensationstemperatur abgekühlt, so dass der im Abgas enthaltene Wasserdampf kondensiert. Das anfallende Kondensat wird in der Regel in einer sogenannten Kondensat-Wanne aufgefangen und dann über eine entsprechende Brennwertkessel-Kondensat-Abführungsvorrichtung zu einer Abwasserleitung abgeführt. Aus dem Stand der Technik bekannte Brennwertkessel-Kondensat-Abführungsvorrichtungen weisen dabei eine nach Art eines Geruchsverschlusses ausgebildete Einrichtung auf, um einen unkontrollierten Austritt von Abgas über die Brennwertkessel-Kondensat-Abführungsvorrichtung zu vermeiden. Diese nach Art eines Geruchsverschlusses ausgebildeten Einrichtungen orientieren sich an vergleichbare Einrichtungen aus dem Sanitärbereich und weisen zum Beispiel ein U-förmig ausgebildetes und mit der Abwasserleitung verbundenes Rohrstück auf. Dabei bestehen solche Einrichtungen aus einer Vielzahl von Bauteilen, wodurch die Gefahr einer Fehlmontage der gesamten Brennwertkessel-Kondensat-Abführungsvorrichtung und damit einer nicht sicheren Sperrwirkung für das Abgas besteht. Daher sind bekannte Brennwertkessel-Kondensat-Abführungsvorrichtungen meist stark überdimensioniert ausgestaltet, was in nachteiliger Weise einen großen Bauraum und eine übertriebene Bauhöhe erfordert.

Aus der DE 11 02 659 B ist ein Geruchsverschluss für Flüssigkeitsleitungen bekannt, welcher ein hohlzylindrisch ausgebildetes Gehäuse aufweist. Während das untere Längsende des Gehäuses verschlossen ist, erfolgt an dem oberen Längsende der Zufluss. Am Umfang des Gehäuses ist ein Ablaufstutzen und umfangsmäßig versetzt dazu ein weiterer, mit einer Schraubkappe verschlossener Stutzen ausgebildet, wobei die Schraubkappe nur zu Reinigungszwecken des Ablaufstutzens entfernt wird, wobei zusätzlich ein den Boden bildender Wassersack und eine Trennwand demontiert werden müssen, so dass mit einer Spirale durch den Stutzen hindurch der Ablaufstutzen gereinigt werden kann.

Aus der CH 373 714 A ist ferner ein als Wasserverschluss und Schmutzfänger dienender Siphon bekannt, welcher aus einem Oberteil mit einer Zufluss-Öffnung und einer Abschluss-Öffnung und einem als Unterteil fungierenden und durchsichtigen Wasserbehälter besteht. Zwischen der Zufluss-Öffnung und der Abfluss-Öffnung ist eine Scheidewand ausgebildet, welche die beiden Öffnungen voneinander trennt und den aus Oberteil und Unterteil bestehenden Siphon in zwei Kanäle unterteilt. Unterhalb der Scheidewand ist ein Durchlass ausgebildet, da sich die Scheidewand nicht bis zum Boden des Unterteils erstreckt.

Aus der EP 0 404 736 A1 ist ein Siphon mit einem Hohlkörper bekannt, wobei in der Umfangswandung des Hohlkörpers ein Einlass-Kanal und ein Auslass-Kanal ausgebildet sind, die sich gegenüberliegend angeordnet sind. Eine Trennwand, welche sich vom oberen Längsende des Hohlkörpers in Richtung des unteren Längsendes erstreckt, unterteilt das Innere des Hohlkörpers in eine erste Kammer und in eine zweite Kammer, wobei unterhalb des freien Endes der Trennwand ein Durchlass ausgebildete ist, welcher die beiden Kammern miteinander verbindet.

Aus der DE 10 2006 041 595 A1 ist ein Siphon mit einem Siphonoberteil, welches über einen Siphon-Einlauf verfügt, und einem Siphonunterteil sowie einem Siphon-Auslauf und einem Behälterteil, welches über eine Pumpe und einen den Füllstand detektierenden Sensor verfügt, bekannt. Das Behälterteil ist zwischen Siphonoberteil und Siphonunterteil angeordnet.

Der Erfindung liegt die Aufgabe zugrunde eine Lösung zu schaffen, die auf konstruktiv einfache Weise eine verbesserte Brennwertkessel-Kondensat-Abführungsvorrichtung bereitstellt, durch welche die vorstehend genannten Nachteile vermieden werden und durch welche eine sichere Sperrwirkung für das Abgas realisiert wird.

Die Aufgabe wird erfindungsgemäß gelöst durch eine Brennwertkessel-Kondensat-Abführungsvorrichtung mit den Merkmalen gemäß dem Anspruch 1.

Die erfindungsgemäße Brennwertkessel-Kondensat-Abführungsvorrichtung weist einen sich in eine Längsrichtung erstreckenden Hohlkörper auf, welcher eine Umfangswandung, ein erstes Längsende und ein zweites Längsende aufweist. Das erste Längsende und das zweite Längsende sind verschlossen, wobei in der Umfangswandung eine Zufluss-Öffnung ausgebildet ist, welche sich beginnend von dem ersten Längsende in Richtung des zweiten Längsendes erstreckt. In der Umfangswandung ist ferner eine Abfluss-Öffnung ausgebildet, welche der Zufluss-Öffnung gegenüberliegend ausgebildet angeordnet ist. Innerhalb des länglichen Hohlkörpers ist eine Trennwand ausgebildet, welche sich von dem ersten Längsende in Richtung des zweiten Längsendes erstreckt und welche ein freies Ende aufweist. Die Trennwand unterteilt den länglichen Hohlkörper in einen Kondensat-Aufnahmekanal, welcher mit der Zufluss-Öffnung strömungsverbunden ist, und einen Kondensat-Abgabekanal, welcher mit der Abfluss-Öffnung strömungsverbunden ist. Der Kondensat-Aufnahmekanal und der Kondensat-Abgabekanal sind dabei über einen zwischen dem freien Ende der Trennwand und dem zweiten Längsende ausgebildeten Durchlass miteinander strömungsverbunden. Die Abfluss-Öffnung und die Zufluss-Öffnung sind in Längsrichtung des Hohlkörpers betrachtet mit einer Überdeckungslänge überdeckend angeordnet, wobei die Abfluss-Öffnung in Längsrichtung betrachtet und umfangsmäßig zu der Zufluss-Öffnung versetzt angeordnet ist. Ein Abstand zwischen einer Mittelpunktachse der Zufluss-Öffnung und einer Mittelpunktachse der Abfluss-Öffnung beträgt weniger als 12% einer in Längsrichtung betrachteten Gesamtlänge des länglichen Hohlkörpers.

Vorteilhafte und zweckmäßige Ausgestaltungen und Weiterbildungen der Erfindung ergeben sich aus den Unteransprüchen.

Durch die Erfindung wird eine Brennwertkessel-Kondensat-Abführungsvorrichtung zur Verfügung gestellt, welche sich durch eine einfache und kompakte Konstruktion auszeichnet. Dadurch, dass in der Umfangswandung des Hohlkörpers die Zufluss-Öffnung und die der Zufluss-Öffnung gegenüberliegend angeordnete Abfluss-Öffnung ausgebildet sind und sich die Zufluss-Öffnung beginnend von dem ersten Längsende in Richtung des zweiten Längsendes erstreckt, erfolgt der Zu- und Ablauf von Kondensat seitlich zu dem Hohlkörper hin und von diesem weg, so dass im Wesentlichen kein Bauraum oberhalb des ersten Längsendes bzw. der Zulauf-Öffnung benötigt wird und die gesamte Längserstreckung des Hohlkörpers auf ein Minimum begrenzt werden kann. Die erforderliche Längserstreckung des Hohlkörpers richtet sich dabei an die benötigte Längserstreckung der Trennwand. Die Längserstreckung der Trennwand ist dabei für die Sperrwirkung verantwortlich, um einen Austritt von Abgas zu verhindern. Damit ergibt sich für eine kompakte und eine geringe Bauhöhe aufweisende Bauform, dass sich die Längserstreckung der Trennwand an den zu erwartenden Abgasdrücken und Druckschwankungen des Brennwertkessels orientiert, wobei erfindungsgemäß für eine minimal ausgestaltete Bauhöhe vorgesehen ist, dass die Abfluss-Öffnung und die Zufluss-Öffnung in Längsrichtung des Hohlkörpers betrachtet mit einer Überdeckungslänge überdeckend angeordnet sind, so dass sich in seitlicher Ansicht die Zufluss-Öffnung und die Abfluss-Öffnung überdecken. Dadurch, dass die Abfluss-Öffnung in Längsrichtung betrachtet und umfangsmäßig zu der Zufluss-Öffnung versetzt angeordnet ist, wird ein Rückfluss von Kondensat in eine Kondensat-Wanne des Brennwertkessels wirksam verhindert. Erfindungsgemäß wird somit eine Brennwertkessel-Kondensat-Abführungsvorrichtung mit einer minimalen Bauhöhe und einer sicheren Abgassperre zur Verfügung gestellt.

Die Erfindung sieht in besonders vorteilhafter Ausgestaltung vor, dass die Überdeckungslänge wenigstens 50% einer maximalen Länge einer Querschnittsfläche der Zufluss-Öffnung beträgt. Im Sinne der Erfindung ist unter einer maximalen Länge einer Querschnittsfläche zum Beispiel bei einer kreisförmigen Querschnittsfläche als Länge ein Durchmesser, bei einer elliptischen Querschnittsfläche als Länge die Hauptachse oder bei einer viereckigen Querschnittsfläche als Länge eine Diagonale zu verstehen.

Im Hinblick auf eine geringe Bauhöhe der Brennwertkessel-Kondensat-Abführungsvorrichtung ist es ferner von Vorteil, wenn eine maximale Länge einer Querschnittsfläche der Zufluss-Öffnung, was wie vorstehend beschrieben eine Diagonale, eine Hauptachse oder ein Durchmesser sein kann, mindestens 20% und höchstens 42% der Längserstreckung der Trennwand beträgt.

In Ausgestaltung der Erfindung ist ferner vorgesehen, dass die Trennwand eine in die Längsrichtung gerichtete Längserstreckung aufweist, welche wenigstens dem 2-fachen und höchstens dem 6-fachen einer maximalen Länge einer Querschnittsfläche der Zufluss-Öffnung, was wie vorstehend beschrieben eine Diagonale, eine Hauptachse oder ein Durchmesser sein kann, entspricht. Diese Längserstreckung der Trennwand ist für Brennwertkessel mit geringer und hoher Nennleistung geeignet, um einen Austritt von Abgas durch die Brennwertkessel-Kondensat-Abführungsvorrichtung zu verhindern.

Ebenfalls ist es in Bezug auf eine Minimierung der Bauhöhe der erfindungsgemäßen Brennwertkessel-Kondensat-Abführungsvorrichtung vorteilhaft, wenn mit Bezug auf eine Seitenansicht auf den Hohlkörper eine Querschnittsfläche der Zufluss-Öffnung und eine Querschnittsfläche der Abfluss-Öffnung eine Überdeckungsfläche ausbilden.

Diesbezüglich sieht die Erfindung in weiterer Ausgestaltung vor, dass mit Bezug auf eine Seitenansicht auf den Hohlkörper die Querschnittsfläche der Zufluss-Öffnung die Querschnittsfläche der Abfluss-Öffnung um wenigstens 35% überdeckend angeordnet ist.

Hinsichtlich eines günstigen Herstellungsprozesses sieht die Erfindung in einer anderen Ausgestaltung vor, dass eine Mittelpunktachse der Zufluss-Öffnung und eine Mittelpunktachse der Abfluss-Öffnung in eine gleiche Raumrichtung weisend angeordnet sind.

Um den Hohlkörper kostengünstig in einem etablierten Tiefziehprozess herzustellen, sieht die Erfindung in Ausgestaltung vor, dass der Hohlkörper in eine Längsrichtung betrachtet konisch ausgebildet ist.

Um einen störungsfreien und nicht gedrosselten Abfluss des Kondensats zu gewährleisten, ist es in Ausgestaltung der Erfindung von Vorteil, wenn eine Querschnittsfläche des Kondensat-Aufnahmekanals und/oder eine Querschnittsfläche des Kondensat-Abgabekanals wenigstens 50% der Querschnittsfläche der Zufluss-Öffnung beträgt oder höchstens der Querschnittsfläche der Zufluss-Öffnung entspricht.

Ebenso ist aus Gründen eines störungsfreien und nicht gedrosselten Kondensat-Abflusses in Ausgestaltung der Erfindung vorgesehen, dass eine Querschnittsfläche des Durchlasses wenigstens 40% einer lichten Querschnittsfläche beträgt, welche sich quer zu der Querschnittsfläche des Durchlasses erstreckt und zwischen dem freien Ende der Trennwand und dem zweiten Längsende angeordnet ist.

Zu Wartungszwecken ist es ferner von besonderem Vorteil, wenn in Ausgestaltung der Erfindung das zweite Längsende des Hohlkörpers von einer lösbar an dem Hohlkörper befestigbaren bzw. befestigbar ausgebildeten Verschlusskappe ausgebildet ist.

Eine kompakte Bauform der Brennwertkessel-Kondensat-Abführungsvorrichtung mit Verschlusskappe ist in Ausgestaltung der Erfindung dadurch gegeben, indem die Verschlusskappe topfförmig ausgebildet ist und den Durchlass ausbildet, welcher den Kondensat-Aufnahmekanal und den Kondensat-Abgabekanal miteinander strömungsverbindet.

Um ohne Demontage der Verschlusskappe erkennen zu können, ob das Innere des Hohlkörpers verschmutzt ist und gereinigt werden muss, sieht die Erfindung in vorteilhafter Ausgestaltung vor, dass die Verschlusskappe zumindest abschnittsweise aus einem transparenten Material besteht.

Damit zum Beispiel die Verschlusskappe über eine Gewindeverbindung von dem Hohlkörper auch ohne Werkzeug gelöst oder an dem Hohlkörper befestigt werden kann, sieht die Erfindung in Ausgestaltung vor, die Verschlusskappe außenseitig mit Einbuchtungen und/oder Ausbuchtungen ausgebildet ist. An den Einbuchtungen und/oder den Ausbuchtungen finden dann die Finger eines Benutzers ausreichend Widerstand, um die Verschlusskappe von dem Hohlkörper zu lösen oder an dem Hohlkörper zu befestigen.

Schließlich ist für eine alternative Ausführungsform der erfindungsgemäßen Brennwertkessel-Kondensat-Abführungsvorrichtung vorgesehen, dass der Hohlkörper einen ersten Teilkörper und einen zweiten Teilkörper aufweist, wobei an dem ersten Teilkörper die Zufluss-Öffnung, die Abfluss-Öffnung und eine erste Teil-Trennwand ausgebildet sind und der erste Teilkörper das erste Längsende aufweist, wobei an dem zweiten Teilkörper das zweite Längsende und eine zweite Teil-Trennwand ausgebildet sind, wobei die erste Teil-Trennwand und die zweite Teil-Trennwand die Trennwand ausbilden und wobei der erste Teilkörper und der zweite Teilkörper lösbar und dichtend miteinander verbunden sind.

Es versteht sich, dass die vorstehend genannten und nachstehenden noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte und bevorzugte Ausführungsbeispiele der Erfindung dargestellt sind.

In der Zeichnung zeigt:
Figur 1 eine Perspektivansicht auf eine erfindungsgemäße Brennwertkessel-Kondensat-Abführungsvorrichtung,
Figur 2 eine Perspektivansicht auf die in Figur 1 gezeigte Brennwertkessel-Kondensat-Abführungsvorrichtung, bei welcher eine Verschlusskappe von einem Hohlkörper demontiert ist,
Figur 3 eine perspektivische Unteransicht auf den aus Figur 2 ersichtlichen Hohlkörper,
Figur 4 eine perspektivische Schnittansicht auf den Hohlkörper und die demontierte Verschlusskappe,
Figur 5 eine Schnittansicht der Brennwertkessel-Kondensat-Abführungsvorrichtung,
Figur 6 eine seitliche und zum Teil transparente Ansicht auf die Brennwertkessel-Kondensat-Abführungsvorrichtung,
Figur 7 eine schematische Darstellung einer Zufluss-Öffnung und einer Abfluss-Öffnung des Hohlkörpers und
Figur 8 in einer Schnittansicht eine alternative Ausführungsform einer erfindungsgemäßen Brennwertkessel-Kondensat-Abführungsvorrichtung.

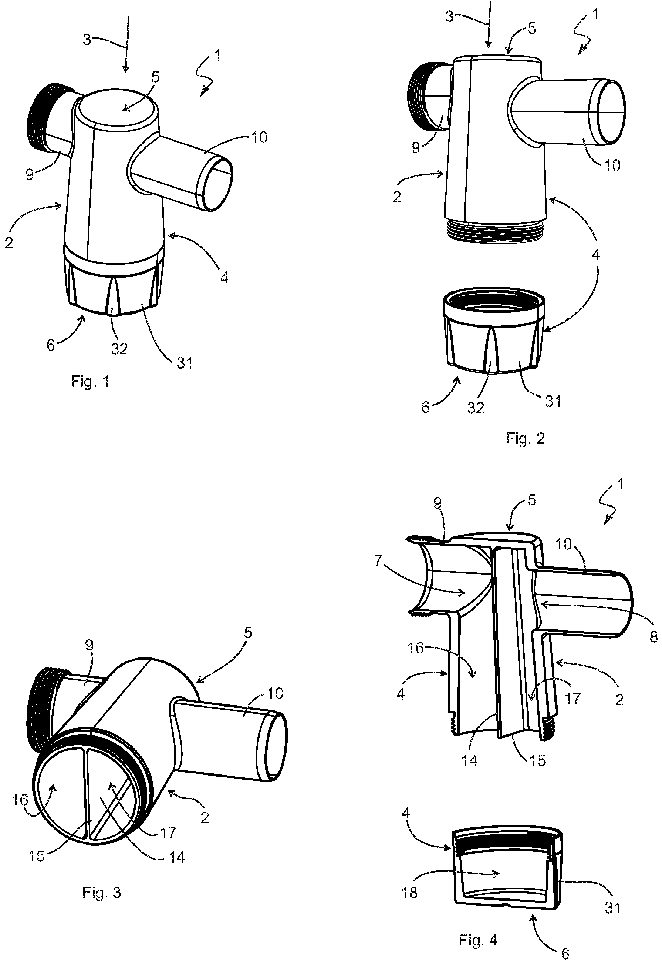

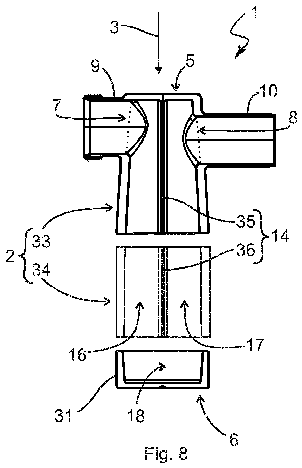

In Figur 1 ist eine erfindungsgemäße Brennwertkessel-Kondensat-Abführungsvorrichtung 1 in einer perspektivischen Ansicht dargestellt, wobei die Figuren 1 bis 7 verschiedene Darstellungen einer ersten Ausführungsform der Brennwertkessel-Kondensat-Abführungsvorrichtung 1 zeigen, wohingegen in Figur 8 eine alternative Ausführungsform der Brennwertkessel-Kondensat-Abführungsvorrichtung 1 gezeigt ist.

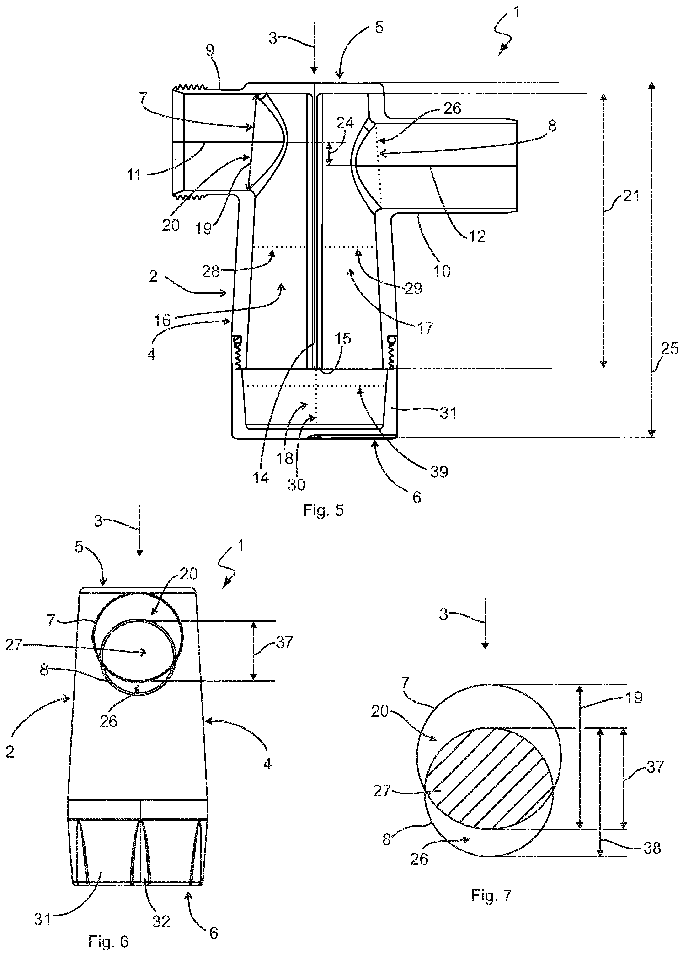

Wie den Figuren 1 bis 7 zu entnehmen ist, weist die erfindungsgemäße Brennwertkessel-Kondensat-Abführungsvorrichtung 1 einen Hohlkörper 2 auf, welcher sich in eine Längsrichtung 3 erstreckt. Der Hohlkörper 2 weist eine Umfangswandung 4 auf, welche sich von einem ersten Längsende 5 des Hohlkörpers 2 bis zu einem zweiten Längsende 6 des Hohlkörpers 2 erstreckt. Bei dem in den Figuren gezeigten Ausführungsbeispiel ist der Hohlkörper 2 in Längsrichtung 3 konisch ausgebildet, wobei alternativ auch eine im Querschnitt betrachtete zylindrische Ausgestaltung denkbar ist. Wie ferner zum Beispiel den Figuren 1, 5 und 6 zu entnehmen ist, ist der Hohlkörper 2 an seinem ersten Längsende 5 und an seinem zweiten Längsende 6 verschlossen. Zur Abführung von Kondensat sind in der Umfangswandung 4 des Hohlkörpers 2 der Brennwertkessel-Kondensat-Abführungsvorrichtung 1 eine Zufluss-Öffnung 7 und eine Abfluss-Öffnung 8 ausgebildet, wie es beispielsweise aus den Schnittdarstellungen der Figuren 4 und 5 hervorgeht. Von der Zufluss-Öffnung 7 erstreckt sich ein Zufluss-Stutzen 9, welcher beispielsweise mit einer Kondensat-Wanne des Brennwertkessels verbindbar ist, wobei der Zufluss-Stutzen 9 zu diesem Zweck in der dargestellten Ausführungsform mit einem Außengewinde versehen ist. Ferner erstreckt sich von der Abfluss-Öffnung 8 ein Abfluss-Stutzen 10, welcher mit einer Abwasserleitung verbindbar ist, um anfallendes und abzuführendes Kondensat abzuführen. Der Zufluss-Stutzen 9 und der Abfluss-Stutzen 10 erstrecken sich jeweils im Wesentlichen senkrecht zu der Längsrichtung 3 des länglichen Hohlkörpers 2, so dass folglich der Zufluss-Stutzen 9 und der Abfluss-Stutzen 10 in eine gleiche Raumrichtung weisen. Denkbar ist es aber auch, dass der Zufluss-Stutzen 9 und/oder der Abfluss-Stutzen 10 leicht geneigt in Richtung des zweiten Längsendes 6 verlaufend ausgebildet ist. Anhand der Figur 5 wird aber das für die gezeigte Ausführungsform Wesentliche deutlich, nämlich dass eine Mittelpunktachse 11 der Zufluss-Öffnung 7 und eine Mittelpunktachse 12 der Abfluss-Öffnung 8 und des Abfluss-Stutzens 10 in eine gleiche Raumrichtung weisend angeordnet sind, wobei die Raumrichtung quer bzw. zur Längsrichtung 3 verläuft.

Wie ferner beispielsweise den Figuren 4 und 5 zu entnehmen ist, ist die Zufluss-Öffnung 7 seitlich an dem ersten Längsende 5 ausgebildet. Dabei erstreckt sich die Zufluss-Öffnung 7 von dem ersten Längsende 5 in Richtung des zweiten Längsendes 6, wobei die Abfluss-Öffnung 8 der Zufluss-Öffnung 7 gegenüberliegend ausgebildet angeordnet ist. Eine gegenüberliegende Anordnung von Zufluss-Öffnung 7 und Abfluss-Öffnung 8 ist nicht zwingend erforderlich. Jedoch ist ein umfangsmäßiger Versatz von Zufluss-Öffnung 7 und Abfluss-Öffnung 8 aufgrund einer die Zufluss-Öffnung 7 von der Abfluss-Öffnung 8 strömungstechnisch trennenden Trennwand 14 erforderlich. Aus der Figur 3 und den Schnittdarstellungen der Figuren 4 und 5 ist zu erkennen, dass innerhalb des länglichen und hohl ausgebildeten Hohlkörpers 2 die Trennwand 14 ausgebildet ist. Die Trennwand 14 erstreckt sich von dem ersten Längsende 5 in Richtung des zweiten Längsendes 6 und weist ein freies Ende 15 (siehe zum Beispiel Figuren 3, 4 und 5) auf. Somit unterteilt die Trennwand 14 den Hohlkörper 2 abschnittsweise in zwei Teilabschnitte, welche bei dem in den Zeichnungen dargestellten Ausführungsbeispiel eine gleichmäßige Unterteilung vorliegt, wodurch die beiden Teilabschnitte einen halbkreisförmigen Querschnitt aufweisen. Denkbar ist selbstverständlich auch eine ungleichmäßige Unterteilung des Hohlkörpers 2 durch die Trennwand 14. Das freie Ende 15 ist dabei zwischen dem ersten Längsende 5 und dem zweiten Längsende 6 angeordnet, wobei die Trennwand 14 den länglichen Hohlkörper 2 in einen Kondensat-Aufnahmekanal 16 und in einen Kondensat-Abgabekanal 17 unterteilt. Wie aus der Figur 3 ersichtlich ist, führt die gleichmäßige Aufteilung des Hohlkörpers 2 wie vorstehend erwähnt dazu, dass der Kondensat-Aufnahmekanal 16 und der Kondensat-Abgabekanal 17 im Querschnitt halbkreisförmig ausgebildet sind, wobei auch eine andere Querschnittsform und/oder unsymmetrische bzw. ungleichmäßige Aufteilung des Hohlkörpers 2 durch die Trennwand 14 denkbar ist. Der Kondensat-Aufnahmekanal 16 ist mit der Zufluss-Öffnung 7 strömungsverbunden, so dass Kondensat von der Kondensat-Wanne des Brennwertkessels über den Zufluss-Stutzen 9 und die Zufluss-Öffnung 7 in den Kondensat-Aufnahmekanal 16 fließen kann. Der Kondensat-Aufnahmekanal 16 und der Kondensat-Abgabekanal 17 sind über einen zwischen dem freien Ende 15 der Trennwand 14 und dem zweiten Längsende 6 ausgebildeten Durchlass 18 miteinander strömungsverbunden. Ferner ist der Kondensat-Abgabekanal 17 über die Abfluss-Öffnung 8 und den Abfluss-Stutzen 10 mit der Abwasserleitung verbunden, so dass Kondensat aus der Brennwertkessel-Kondensat-Abführungsvorrichtung 1 abgeführt werden kann.

Die durch die Erfindung sich ergebende geringe Bauhöhe der Brennwertkessel-Kondensat-Abführungsvorrichtung 1 wird zum einen durch die Anordnung der Zufluss-Öffnung 7 sowie des senkrecht von der Umfangswandung 4 des Hohlkörpers 2 sich erstreckenden Zufluss-Stutzens 9, aber auch durch die Anordnung der Abfluss-Öffnung 8 sowie des senkrecht von der Umfangswandung des Hohlkörpers 2 sich erstreckenden Abfluss-Stutzens 10 erreicht. Zum anderen wird die geringe Bauhöhe dadurch realisiert, dass die Trennwand 14 nicht beliebig lang in Längsrichtung 3 und in Richtung des zweiten Längsendes 6 ausgebildet ist. Vielmehr orientiert sich eine Längserstreckung 21 der Trennwand 14 in Längsrichtung 3 an denkbaren Druckschwankungen des Abgases des Brennwertkessels und der Größe der Zufluss-Öffnung 7, um zu verhindern, dass Abgas über die Brennwertkessel-Kondensat-Abführungsvorrichtung 1 austritt. Dabei hat es sich als vorteilhaft erwiesen, dass eine maximale Länge 19 einer Querschnittsfläche 20 der Zufluss-Öffnung 7 mindestens 20% und höchstens 42% einer in die Längsrichtung 3 gerichteten Längserstreckung 21 der Trennwand 14 beträgt. Die maximale Länge 19 der Querschnittsfläche 20 ist zum Beispiel bei einer kreisförmigen Querschnittsfläche, wie sie bei dem gezeigten Ausführungsbeispiel vorliegt, als Länge ein Durchmesser. Alternativ ist die maximale Länge 19 bei einer viereckigen Querschnittsfläche als Länge einer Diagonale zu verstehen, wobei ferner bei einer elliptischen Querschnittsfläche die maximale Länge die Hauptachse ist. Da es sich bei dem Ausführungsbeispiel um eine kreisförmige Querschnittsfläche 20 handelt, weist die Trennwand 14 somit eine in die Längsrichtung 3 gerichtete Längserstreckung 21 auf, welche wenigstens das 2-fache und höchstens das 6-fache des Durchmessers 19, also der maximalen Länge der Querschnittsfläche 20, der Zufluss-Öffnung 7 beträgt.

Wie ferner aus den Figuren ersichtlich ist, ist die Abfluss-Öffnung 8 in Längsrichtung 3 zu der Zufluss-Öffnung 7 versetzt angeordnet, was nicht nur einen umfangsmäßigen Versatz, sondern insbesondere einen Versatz in Längsrichtung 3 betrifft. Die versetzte Anordnung wird besonders deutlich durch eine Betrachtung der Mittelpunktachsen 11 und 12 der Zufluss-Öffnung 7 und der Abfluss-Öffnung 8. Gemäß der Erfindung beträgt ein Abstand 24 (siehe zum Beispiel Figur 5) zwischen der Mittelpunktachse 11 der Zufluss-Öffnung 7 und der Mittelpunktachse 12 der Abfluss-Öffnung 8 weniger als 12% einer in Längsrichtung 3 betrachteten Gesamtlänge 25 des länglichen Hohlkörpers 2. Ein Versatz der Abfluss-Öffnung 8 zu der Zufluss-Öffnung 7 ist aber nicht zwingend erforderlich, denn denkbar ist auch eine Anordnung der Abfluss-Öffnung 8 zu der Zufluss-Öffnung 7, bei welcher die Abfluss-Öffnung 8 auf gleicher Höhe wie die Zufluss-Öffnung 7 angeordnet ist. Wichtig für die Erfindung in Bezug auf eine geringe Bauhöhe ist es hingegen, dass sich die Zufluss-Öffnung 7 und die Abfluss-Öffnung 8 zu einem gewissen Maß überdecken. Dies bedeutet, dass in Längsrichtung 3 des Hohlkörpers 2 betrachtet die Abfluss-Öffnung 8 und die Zufluss-Öffnung 7 mit einer Überdeckungslänge 37 (siehe zum Beispiel Figuren 6 und 7) sich überdeckend angeordnet sind, was insbesondere durch die Seitenansicht auf den Hohlkörper 2 in Figur 6 zu erkennen ist, welche eine zum Teil transparente Darstellung zeigt, bei welcher die Querschnittsfläche 20 der Zufluss-Öffnung 7 und eine Querschnittsfläche 26 der Abfluss-Öffnung 8 eine Überdeckungsfläche 27 und die Überdeckungslänge 37 ausbilden, wie es ebenso schematisch in Figur 7 für die beiden Querschnittsflächen 20 und 26 gezeigt ist. Als besonders vorteilhaft hat es sich hierbei gezeigt, wenn mit Bezug auf eine Seitenansicht auf den Hohlkörper 2 die Querschnittsfläche 20 der Zufluss-Öffnung 7 die Querschnittsfläche 26 der Abfluss-Öffnung 8 um wenigstens 35% überdeckend angeordnet ist. Erfindungsgemäß beträgt die Überdeckungslänge 37 wenigstens 50% der maximalen Länge bzw. des Durchmessers 19 der Querschnittsfläche 20 der Zufluss-Öffnung 7. In Figur 7 ist ferner eine maximale Länge 38 der Querschnittsfläche 26 der Abfluss-Öffnung 8 gezeigt, wobei es sich bei dieser maximalen Länge 38 um den Durchmesser der Querschnittsfläche 26 handelt. Es sei angemerkt, dass die Zufluss-Öffnung 7 und die Abfluss-Öffnung 8 identische Durchmesser bzw. maximale Längen 19 und 38 aufweisen können. Die Durchmesser bzw. maximalen Längen 19 und 38 können aber auch unterschiedlich zueinander ausgebildet sein.

Für einen gleichmäßigen und ungedrosselten Kondensat-Abfluss über die Brennwertkessel-Kondensat-Abführungsvorrichtung 1 ist bei dem in den Figuren gezeigten Ausführungsbeispiel vorgesehen, dass die verschiedenen Querschnittsflächen bei dem Hohlkörper 2 der Brennwertkessel-Kondensat-Abführungsvorrichtung 1 ein gewisses Minimum aufweisen und ein gewisses Maximum nicht überschreiten. Hierzu ist vorgesehen, dass eine Querschnittsfläche 28 des Kondensat-Aufnahmekanals 16 wenigstens 50% der Querschnittsfläche 20 der Zufluss-Öffnung 7 beträgt, wobei die Querschnittfläche 28 des Kondensat-Aufnahmekanals 16 höchstens der Größe der Querschnittsfläche 20 der Zufluss-Öffnung 7 entspricht. Ebenso soll eine Querschnittsfläche 29 des Kondensat-Abgabekanals 17 wenigstens 50% der Querschnittsfläche 20 der Zufluss-Öffnung 7 betragen, wobei die Querschnittfläche 29 des Kondensat-Abgabekanals 17 höchstens der Größe der Querschnittsfläche 20 der Zufluss-Öffnung 7 entsprechen soll. Auch sollte eine Querschnittsfläche 30 des Durchlasses 18, welche sich zwischen dem zweiten Längsende 6 und dem freien Ende 15 der Trennwand 14 erstreckt, wenigstens 40% einer lichten Querschnittsfläche 39 (siehe Figur 5) betragen, wobei sich die lichte Querschnittfläche 39 quer zu der Querschnittsfläche 30 des Durchlasses 18 erstreckt und die lichte Querschnittsfläche 39 zwischen dem freien Ende 15 der Trennwand 14 und dem zweiten Längsende 6 angeordnet ist. Bei dem in den Figuren gezeigten Ausführungsbeispiel entsprechen die dargestellten Querschnittflächen den vorstehend angegebenen Verhältnissen und gewährleisten einen gleichmäßigen Abfluss von Kondensat.

Bei dem in den Figuren dargestellten Ausführungsbeispiel ist das zweite Längsende 6 des Hohlkörpers 2 von einer Verschlusskappe 31 ausgebildet. Die Verschlusskappe 31 ist dabei über eine Gewindeverbindung lösbar an dem Hohlkörper 2 befestigt und kann zu Wartungszwecken oder zur Reinigung des Hohlkörpers 2 von dem Hohlkörper 2 gelöst werden. Wie zum Beispiel aus den Figuren 2, 4 und 5 ersichtlich ist, ist die Verschlusskappe 31 topfförmig ausgebildet und mit einem Innengewinde versehen, welches mit einem an dem Hohlkörper 2 ausgebildeten Außengewinde in Eingriff bringbar ist, um die Verschlusskappe 31 an dem Hohlkörper 2 zu montieren. Dabei bildet das hohle Innere der Verschlusskappe 31 den Durchlass 18 aus, so dass sich die Trennwand 14 über die gesamte Länge des Hohlkörpers 2 erstreckt, wie es auch aus Figur 3 ersichtlich ist. Jedoch bildet die Verschlusskappe 31 einen Abschnitt der Umfangswand 4 aus, wobei der übrige Abschnitt der Umfangswand 4 von dem Hohlkörper 2 ausgebildet ist. Die Verschlusskappe 31 bildet zusätzlich den Durchlass 18 aus, welcher den Kondensat-Aufnahmekanal 16 und den Kondensat-Abgabekanal 17 miteinander strömungsverbindet. Um besser abschätzen zu können, ob eine Reinigung des Hohlkörpers 2 der Brennwertkessel-Kondensat-Abführungsvorrichtung 1 erforderlich ist, ist die Verschlusskappe 31 zumindest abschnittsweise aus einem transparenten Material ausgebildet, so dass eine optische Überprüfung des Verschmutzungsgrades jederzeit ohne Demontage der Verschlusskappe 31 durchgeführt werden kann. Die Verschlusskappe 31 kann dabei ohne Zuhilfenahme eines Werkzeugs sowohl von dem Hohlkörper 2 demontiert als auch an dem Hohlkörper 2 montiert werden. Zu diesem Zweck weist die Verschlusskappe 31 mehrere um den Umfang der Verschlusskappe 31 ausgebildete Ausbuchtungen 32 auf, die zur händischen Handhabung der Verschlusskappe 31 durch einen Benutzer dienen. Denkbar ist es dabei auch, dass der Ausbuchtungen eine Vielzahl von Einbuchtungen am Umfang der Verschlusskappe 31 vorzusehen.

In Figur 8 ist schließlich eine alternative Ausführungsform dargestellt. Diese alternative Ausführungsform unterscheidet sich von der in den Figuren 1 bis 7 gezeigten Ausführungsform lediglich dadurch, dass der Hohlkörper 2 nun nicht mehr einstückig ausgebildet ist, sondern aus mehreren Teilen besteht. Alle vorstehend genannten Merkmale für die in den Figuren 1 bis 7 gezeigte Ausführungsform gelten auch nach wie vor für die in der Figur 8 gezeigte Ausführungsform. Gemäß der in Figur 8 gezeigten alternativen Ausführungsform weist der Hohlkörper 2 einen ersten Teilkörper 33 und einen zweiten Teilkörper 34 auf. Dabei sind an dem ersten Teilkörper 33 die Zufluss-Öffnung 7, die Abfluss-Öffnung 8 und eine erste Teil-Trennwand 35 ausgebildet, wobei der erste Teilkörper 33 ferner das erste Längsende 5 aufweist. Demgegenüber sind an dem zweiten Teilkörper 34 das zweite Längsende 6 und eine zweite Teil-Trennwand 36 ausgebildet. Die erste Teil-Trennwand 35 und die zweite Teil-Trennwand 36 bilden dabei die Trennwand 14 aus, wobei der erste Teilkörper 33 und der zweite Teilkörper 34 lösbar und dichtend miteinander verbunden sind. Wie ferner der Figur 8 zu entnehmen ist, ist an der zweite Teilkörper 34 zwischen dem ersten Teilkörper 33 und der Verschlusskappe 31 angeordnet, wobei die Verschlusskappe 31 das zweite Längsende 6 ausbildet, so dass die Verschlusskappe 31 bei der in Figur 8 gezeigten Ausführungsform ein Teil des zweiten Teilkörpers 34 ist und der zweite Teilkörper 34 damit zweiteilig ausgeführt ist. Denkbar ist aber auch in Abwandlung der in Figur 8 gezeigten Ausführungsform eine Ausführung, bei welcher keine lösbar angebrachte Verschlusskappe 31 vorgesehen ist, sondern vielmehr der zweite Teilkörper 34 und die Verschlusskappe 31 einstückig ausgeführt sind, so dass der Hohlkörper 2 an seinem zweiten Längsende 6 nicht öffenbar ist.

Die beschriebene Erfindung ist selbstverständlich nicht auf die beschriebenen und dargestellten Ausführungsformen beschränkt. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von den konkreten Ausführungsbeispielen für den Fachmann naheliegt.

## Patentansprüche

1. Brennwertkessel-Kondensat-Abführungsvorrichtung (1), aufweisend einen sich in eine Längsrichtung (3) erstreckenden Hohlkörper (2), welcher eine Umfangswandung (4), ein erstes Längsende (5) und ein zweites Längsende (6) aufweist,
wobei das erste Längsende (5) und das zweite Längsende (6) verschlossen sind und in der Umfangswandung (4) eine Zufluss-Öffnung (7) ausgebildet ist, welche sich beginnend von dem ersten Längsende (5) in Richtung des zweiten Längsendes (6) erstreckt,
wobei in der Umfangswandung (4) eine Abfluss-Öffnung (8) ausgebildet ist, welche der Zufluss-Öffnung (7) gegenüberliegend ausgebildet angeordnet ist,
wobei innerhalb des länglichen Hohlkörpers (2) eine Trennwand (14) ausgebildet ist, welche sich von dem ersten Längsende (5) in Richtung des zweiten Längsendes (6) erstreckt und welche ein freies Ende (15) aufweist,
wobei die Trennwand (14) den länglichen Hohlkörper (2) in einen Kondensat-Aufnahmekanal (16), welcher mit der Zufluss-Öffnung (7) strömungsverbunden ist, und einen Kondensat-Abgabekanal (17), welcher mit der Abfluss-Öffnung (8) strömungsverbunden ist, unterteilt,
wobei der Kondensat-Aufnahmekanal (16) und der Kondensat-Abgabekanal (17) über einen zwischen dem freien Ende (15) der Trennwand (14) und dem zweiten Längsende (6) ausgebildeten Durchlass (18) miteinander strömungsverbunden sind,
wobei die Abfluss-Öffnung (8) und die Zufluss-Öffnung (7) in Längsrichtung (3) des Hohlkörpers (2) betrachtet mit einer Überdeckungslänge (37) überdeckend angeordnet sind,
**dadurch gekennzeichnet,**
**dass** die Abfluss-Öffnung (8) in Längsrichtung (3) und umfangsmäßig zu der Zufluss-Öffnung (7) versetzt angeordnet ist,
wobei ein Abstand (24) zwischen einer Mittelpunktachse (11) der Zufluss-Öffnung (7) und einer Mittelpunktachse (12) der Abfluss-Öffnung (8) weniger als 12% einer in Längsrichtung (3) betrachteten Gesamtlänge (25) des länglichen Hohlkörpers (2) beträgt.

2. Brennwertkessel-Kondensat-Abführungsvorrichtung (1) nach Anspruch 1, wobei die Überdeckungslänge (37) wenigstens 50% einer maximalen Länge (19) einer Querschnittsfläche (20) der Zufluss-Öffnung (7) beträgt.

3. Brennwertkessel-Kondensat-Abführungsvorrichtung (1) nach Anspruch 1 oder 2, wobei eine maximale Länge (19) einer Querschnittsfläche (20) der Zufluss-Öffnung (7) mindestens 20% und höchstens 42% einer in die Längsrichtung (3) gerichteten Längserstreckung (21) der Trennwand (14) beträgt.

4. Brennwertkessel-Kondensat-Abführungsvorrichtung (1) nach einem der vorhergehenden Ansprüche, wobei die Trennwand (14) eine in die Längsrichtung (3) gerichtete Längserstreckung (21) aufweist, welche wenigstens das 2-fache und höchstens das 6-fache einer maximalen Länge (19) der Zufluss-Öffnung (7) beträgt.

5. Brennwertkessel-Kondensat-Abführungsvorrichtung (1) nach einem der vorhergehenden Ansprüche, wobei mit Bezug auf eine Seitenansicht auf den Hohlkörper (2) eine Querschnittsfläche (20) der Zufluss-Öffnung (7) und eine Querschnittsfläche (26) der Abfluss-Öffnung (8) eine Überdeckungsfläche (27) ausbilden.

6. Brennwertkessel-Kondensat-Abführungsvorrichtung (1) nach Anspruch 5, wobei mit Bezug auf eine Seitenansicht auf den Hohlkörper (2) die Querschnittsfläche (20) der Zufluss-Öffnung (7) die Querschnittsfläche (26) der Abfluss-Öffnung (8) um wenigstens 35% überdeckend angeordnet ist.

7. Brennwertkessel-Kondensat-Abführungsvorrichtung (1) nach einem der vorhergehenden Ansprüche, wobei eine Mittelpunktachse (11) der Zufluss-Öffnung (7) und eine Mittelpunktachse (12) der Abfluss-Öffnung (8) in eine gleiche Raumrichtung weisend angeordnet sind.

8. Brennwertkessel-Kondensat-Abführungsvorrichtung (1) nach einem der vorhergehenden Ansprüche, wobei der Hohlkörper (2) in die Längsrichtung (3) konisch ausgebildet ist.

9. Brennwertkessel-Kondensat-Abführungsvorrichtung (1) nach einem der vorhergehenden Ansprüche, wobei eine Querschnittsfläche (28) des Kondensat-Aufnahmekanals (16) und/oder eine Querschnittsfläche (29) des Kondensat-Abgabekanals (17) wenigstens 50% der Querschnittsfläche (20) der Zufluss-Öffnung (7) beträgt oder höchstens der Querschnittsfläche (20) der Zufluss-Öffnung (7) entspricht.

10. Brennwertkessel-Kondensat-Abführungsvorrichtung (1) nach einem der vorhergehenden Ansprüche, wobei eine Querschnittsfläche (30) des Durchlasses (18) wenigstens 40% einer lichten Querschnittsfläche (39) beträgt, welche sich quer zu der Querschnittsfläche (30) des Durchlasses (18) erstreckt und zwischen dem freien Ende (15) der Trennwand (14) und dem zweiten Längsende (6) angeordnet ist.

11. Brennwertkessel-Kondensat-Abführungsvorrichtung (1) nach einem der vorhergehenden Ansprüche, wobei das zweite Längsende (6) des Hohlkörpers (2) von einer lösbar an dem Hohlkörper (2) befestigbaren Verschlusskappe (31) ausgebildet ist.

12. Brennwertkessel-Kondensat-Abführungsvorrichtung (1) nach Anspruch 13, wobei die Verschlusskappe (31) topfförmig ausgebildet ist und den Durchlass (18) ausbildet, welcher den Kondensat-Aufnahmekanal (16) und den Kondensat-Abgabekanal (17) miteinander strömungsverbindet.

13. Brennwertkessel-Kondensat-Abführungsvorrichtung (1) nach Anspruch 11 oder 12, wobei die Verschlusskappe (31) zumindest abschnittsweise aus einem transparenten Material besteht.

14. Brennwertkessel-Kondensat-Abführungsvorrichtung (1) nach Anspruch 11, 12 oder 13, wobei die Verschlusskappe (31) außenseitig mit Einbuchtungen und/oder Ausbuchtungen (32) ausgebildet ist.

15. Brennwertkessel-Kondensat-Abführungsvorrichtung (1) nach einem der vorhergehenden Ansprüche, wobei der Hohlkörper (2) einen ersten Teilkörper (33) und einen zweiten Teilkörper (34) aufweist, wobei an dem ersten Teilkörper (33) die Zufluss-Öffnung (7), die Abfluss-Öffnung (8) und eine erste Teil-Trennwand (35) ausgebildet sind und der erste Teilkörper (33) das erste Längsende (5) aufweist, wobei an dem zweiten Teilkörper (34) das zweite Längsende (6) und eine zweite Teil-Trennwand (36) ausgebildet sind, wobei die erste Teil-Trennwand (35) und die zweite Teil-Trennwand (36) die Trennwand (14) ausbilden und wobei der erste Teilkörper (33) und der zweite Teilkörper (34) lösbar und dichtend miteinander verbunden sind.

## Claims

1. Fuel container condensate discharge device (1), having a hollow body (2) extending in a longitudinal direction (3), which hollow body (2) has a peripheral wall (4), a first longitudinal end (5) and a second longitudinal end (6),
wherein the first longitudinal end (5) and the second longitudinal end (6) are closed and an inflow opening (7) is designed in the peripheral wall (4), which inflow opening (7) extends starting from the first longitudinal end (5) in the direction of the second longitudinal end (6),
wherein a drain opening (8) is designed in the peripheral wall (4), which drain opening (8) is opposite the inflow opening (7),
wherein a separating wall (14) is designed within the longitudinal hollow body (2), which separating wall (14) extends from the first longitudinal end (5) in the direction of the second longitudinal end (6) and which has a free end (15),
wherein the separating wall (14) divides the longitudinal hollow body (2) into a condensate receiving channel (16), which is flow-connected to the inflow opening (7), and a condensate discharge channel (17), which is flow-connected to the drain opening (8),
wherein the condensate receiving channel (16) and the condensate discharge channel (17) are flow-connected to each other via a passage (18) designed between the free end (15) of the separating wall (14) and the second longitudinal end (6),
wherein the drain opening (8) and the inflow opening (7) are arranged to be overlapping with an overlap length (37) as viewed in the longitudinal direction (3) of the hollow body (2),
**characterized in that**
the drain opening (8) is arranged offset in longitudinal direction (3) and circumferentially to the inflow opening (7),
wherein a distance (24) between a centre axis (11) of the inflow opening (7) and a centre axis (12) of the drain opening (8) is less than 12% of an overall length (25) of the longitudinal hollow body (2) as viewed in a longitudinal direction (3).

2. Fuel container condensate discharge device (1) according to claim 1, wherein the overlap length (37) is at least 50% of a maximum length (19) of a cross-sectional area (20) of the inflow opening (7).

3. Fuel container condensate discharge device (1) according to claim 1 or 2, wherein a maximum length (19) of a cross-sectional area (20) of the inflow opening (7) is at least 20% and no more than 42% of a longitudinal extension (21) of the separating wall (14) directed in the longitudinal direction (3) .

4. Fuel container condensate discharge device (1) according to one of the preceding claims, wherein the separating wall (14) has a longitudinal extension (21) directed in the longitudinal direction (3) and which is at least twice and no more than 6 times a maximum length (19) of the inflow opening (7) .

5. Fuel container condensate discharge device (1) according to one of the preceding claims, wherein, with reference to a side view of the hollow body (2), a cross-sectional area (20) of the inflow opening (7) and a cross-sectional area (26) of the outflow opening (8) form an overlapping area (27).

6. Fuel container condensate discharge device (1) according to claim 5, wherein with reference to a side view of the hollow body (2), the cross-sectional area (20) of the inflow opening (7) and the cross-sectional area (26) of the drain opening (8) are arranged to overlap by at least 35%.

7. Fuel container condensate discharge device (1) according to one of the preceding claims, wherein a centre axis (11) of the inflow opening (7) and a centre axis (12) of the drain opening (8) are arranged facing in a same spatial direction.

8. Fuel container condensate discharge device (1) according to one of the preceding claims, wherein the hollow body (2) is conical in the longitudinal direction (3).

9. Fuel container condensate discharge device (1) according to one of the preceding claims, wherein a cross-sectional area (28) of the condensate receiving channel (16) and/or a cross-sectional area (29) of the condensate discharge channel (17) corresponds to at least 50% of the cross-sectional area (20) of the inflow opening (7) or at most to the cross-sectional area (20) of the inflow opening (7).

10. Fuel container condensate discharge device (1) according to one of the preceding claims, wherein a cross-sectional area (30) of the passage (18) is at least 40% of a clear cross-sectional area (39), which extends transversely to the cross-sectional area (30) of the passage (18) and is arranged between the free end (15) of the separating wall (14) and the second longitudinal end (6).

11. Fuel container condensate discharge device (1) according to one of the preceding claims, wherein the second longitudinal end (6) of the hollow body (2) is formed by a cap (31) that can be releasably attached to the hollow body (2).

12. Fuel container condensate discharge device (1) according to claim 13, wherein the cap (31) is pot-shaped and forms the passage (18), which connects the condensate receiving channel (16) and the condensate discharge channel (17) to one another in terms of flow.

13. Fuel container condensate discharge device (1) according to claims 11 or 12, wherein the cap (31) consists of a transparent material at least in sections.

14. Fuel container condensate discharge device (1) according to claim 11, 12 or 13, wherein the cap (31) is designed on the outside with indentations and/or protrusions (32) .

15. Fuel container condensate discharge device (1) according to one of the preceding claims, wherein the hollow body (2) has a first partial body (33) and a second partial body (34), wherein the inflow opening (7), the drain opening (8) and a first partial separating wall (35) are formed on the first partial body (33), and the first partial body (33) has the first longitudinal end (5), wherein the second longitudinal end (6) and a second partial separating wall (36) are formed on the second partial body (34), wherein the first partial separating wall (35) and the second partial separating wall (36) form the separating wall (14) and wherein the first partial body (33) and the second partial body (34) are releasably connected to one another in a sealing manner.

## Revendications

1. Dispositif d'évacuation de condensat de chaudière à condensation (1), présentant un corps creux (2) s'étendant dans une direction longitudinale (3), qui présente une paroi périphérique (4), une première extrémité longitudinale (5) et une deuxième extrémité longitudinale (6),
la première extrémité longitudinale (5) et la deuxième extrémité longitudinale (6) étant fermées et une ouverture d'alimentation (7) étant formée dans la paroi périphérique (4), laquelle s'étend depuis la première extrémité longitudinale (5) en direction de la deuxième extrémité longitudinale (6),
dans lequel une ouverture d'évacuation (8) est formée dans la paroi périphérique (4), laquelle est disposée en face de l'ouverture d'alimentation (7),
dans lequel une paroi de séparation (14) est formée à l'intérieur du corps creux allongé (2), qui s'étend depuis la première extrémité longitudinale (5) en direction de la deuxième extrémité longitudinale (6) et qui présente une extrémité libre (15),
dans lequel la paroi de séparation (14) divise le corps creux allongé (2) en un canal de réception de condensat (16) qui est en communication fluidique avec l'ouverture d'alimentation (7) et un canal de d'évacuation de condensat (17) qui est en communication fluidique avec l'ouverture d' d'évacuation (8),
dans lequel le canal de réception de condensat (16) et le canal d'évacuation de condensat (17) sont reliés l'un à l'autre par un passage (18) formé entre l'extrémité libre (15) de la paroi de séparation (14) et la deuxième extrémité longitudinale (6),
l'ouverture d'évacuation (8) et l'ouverture d'alimentation (7) étant disposées de manière à se chevaucher, vu dans la direction longitudinale (3) du corps creux (2), avec une longueur de chevauchement (37),
**caractérisé en ce que**
l'ouverture d'évacuation (8) est disposée de manière décalée dans la direction longitudinale (3) et circonférentiellement par rapport à l'ouverture d'alimentation (7),
dans lequel une distance (24) entre un axe central (11) de l'ouverture d'alimentation (7) et un axe central (12) de l'ouverture d'évacuation (8) est inférieure à 12% d'une longueur totale (25) du corps creux allongé (2), considérée dans la direction longitudinale (3).

2. Dispositif d'évacuation de condensat de chaudière à condensation (1) selon la revendication 1, dans lequel la longueur de recouvrement (37) est au moins égale à 50% d'une longueur maximale (19) d'une surface de section transversale (20) de l'ouverture d'alimentation (7).

3. Dispositif d'évacuation de condensat de chaudière à condensation (1) selon la revendication 1 ou 2, dans lequel une longueur maximale (19) d'une surface de section transversale (20) de l'ouverture d'alimentation (7) est d'au moins 20% et d'au plus 42% d'une extension longitudinale (21) de la paroi de séparation (14) orientée dans la direction longitudinale (3).

4. Dispositif d'évacuation de condensat de chaudière à condensation (1) selon l'une quelconque des revendications précédentes, dans lequel la paroi de séparation (14) présente une extension longitudinale (21) orientée dans la direction longitudinale (3), qui est au moins égale à 2 fois et au plus à 6 fois une longueur maximale (19) de l'ouverture d'alimentation (7).

5. Dispositif d'évacuation de condensat de chaudière à condensation (1) selon l'une quelconque des revendications précédentes, dans lequel, par rapport à une vue latérale du corps creux (2), une surface de section transversale (20) de l'ouverture d'alimentation (7) et une surface de section transversale (26) de l'ouverture d'évacuation (8) forment une surface de recouvrement (27).

6. Dispositif d'évacuation de condensat de chaudière à condensation (1) selon la revendication 5, dans lequel, par rapport à une vue latérale du corps creux (2), la surface de section transversale (20) de l'ouverture d'alimentation (7) est disposée de manière à recouvrir d'au moins 35% la surface de section transversale (26) de l'ouverture d'évacuation (8).

7. Dispositif d'évacuation de condensat de chaudière à condensation (1) selon l'une quelconque des revendications précédentes, dans lequel un axe central (11) de l'ouverture d'alimentation (7) et un axe central (12) de l'ouverture d'évacuation (8) sont disposés en étant orientés dans une même direction spatiale.

8. Dispositif d'évacuation de condensat de chaudière à condensation (1) selon l'une quelconque des revendications précédentes, dans lequel le corps creux (2) est de forme conique dans la direction longitudinale (3).

9. Dispositif d'évacuation de condensat de chaudière à condensation (1) selon l'une quelconque des revendications précédentes, dans lequel une surface de section transversale (28) du canal de réception de condensat (16) et/ou une surface de section transversale (29) du canal d'évacuation de condensat (17) est au moins égale à 50% de la surface de section transversale (20) de l'ouverture d'alimentation (7) ou est au plus égale à la surface de section transversale (20) de l'ouverture d'alimentation (7).

10. Dispositif d'évacuation de condensat de chaudière à condensation (1) selon l'une quelconque des revendications précédentes, dans lequel une surface de section transversale (30) du passage (18) est au moins égale à 40% d'une surface de section transversale libre (39) qui s'étend transversalement à la surface de section transversale (30) du passage (18) et qui est située entre l'extrémité libre (15) de la paroi de séparation (14) et la deuxième extrémité longitudinale (6).

11. Dispositif d'évacuation de condensat de chaudière à condensation (1) selon l'une quelconque des revendications précédentes, dans lequel la deuxième extrémité longitudinale (6) du corps creux (2) est formée par un capuchon de fermeture (31) pouvant être fixé de manière amovible sur le corps creux (2) .

12. Dispositif d'évacuation de condensat de chaudière à condensation (1) selon la revendication 13, dans lequel le capuchon de fermeture (31) est réalisé en forme de pot et forme le passage (18) qui relie entre eux le canal de réception de condensat (16) et le canal d'évacuation de condensat (17).

13. Dispositif d'évacuation de condensat de chaudière à condensation (1) selon la revendication 11 ou 12, dans lequel le capuchon de fermeture (31) est constitué au moins par sections d'un matériau transparent.

14. Dispositif d'évacuation du condensat d'une chaudière à condensation (1) selon la revendication 11, 12 ou 13, dans lequel le capuchon de fermeture (31) est réalisé sur le côté extérieur avec des renfoncements et/ou des bosses (32).

15. Dispositif d'évacuation de condensat de chaudière à condensation (1) selon l'une quelconque des revendications précédentes, dans lequel le corps creux (2) comporte un premier corps partiel (33) et un deuxième corps partiel (34), le premier corps partiel (33) comportant l'ouverture d'alimentation (7), l'ouverture d'évacuation (8) et une première paroi de séparation partielle (35), et le premier corps partiel (33) comportant la première extrémité longitudinale (5), la deuxième extrémité longitudinale (6) et une deuxième paroi de séparation partielle (36) étant formées sur le deuxième corps partiel (34), la première paroi de séparation partielle (35) et la deuxième paroi de séparation partielle (36) formant la paroi de séparation (14) et le premier corps partiel (33) et le deuxième corps partiel (34) étant reliés entre eux de manière amovible et étanche.
